(19) Europäisches Patentamt
European Patent Office
Office européen des brevets

(11) **EP 4 056 399 A1**

(12) **EUROPEAN PATENT APPLICATION**

(43) Date of publication:
**14.09.2022 Bulletin 2022/37**

(21) Application number: **22160477.0**

(22) Date of filing: **07.03.2022**

(51) International Patent Classification (IPC):
**B60K 35/00** (2006.01)

(52) Cooperative Patent Classification (CPC):
**B60K 35/00;** B60K 2370/1529; B60K 2370/167;
B60K 2370/177; B60K 2370/178; B60K 2370/179;
B60K 2370/21; B60K 2370/31; B60W 2555/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021 JP 2021037889**

(71) Applicant: **Yazaki Corporation
Minato-ku
Tokyo 108-8333 (JP)**

(72) Inventors:
• **Okamoto, Shinichi**
**Shizuoka, 410-1194 (JP)**
• **Yoshida, Akihiro**
**Shizuoka, 410-1194 (JP)**
• **Matsuo, Yoshiharu**
**Shizuoka, 421-0407 (JP)**
• **Yamamoto, Sosuke**
**Shizuoka, 421-0407 (JP)**

(74) Representative: **Grünecker Patent- und
Rechtsanwälte
PartG mbB
Leopoldstraße 4
80802 München (DE)**

(54) **VEHICULAR DISPLAY APPARATUS**

(57) A vehicular display apparatus (1) includes: an acquisition unit (2) configured to acquire information regarding a speed of wind and a direction of the wind at a predetermined location ahead of a vehicle (100); a generation unit (8) configured to generate a display figure (30), based on the information; and a display device (9) configured to display an image of the display figure (30) ahead of a driver (200) in the vehicle (100), in which the generation unit (8) generates, in a case where the wind includes a crosswind, the display figure (30) in a horizontally-long flat shape and moves a display position of the display figure (30) in a direction of the crosswind.

FIG.1

EP 4 056 399 A1

**Description**

BACKGROUND OF THE INVENTION

1. Field of the Invention

The present invention relates to a vehicular display apparatus.

2. Description of the Related Art

Conventionally, there has been a technique of displaying the direction of wind. WO 2018/020546 A discloses a display control apparatus including a weather information acquisition unit and a display control unit that controls wind information including the direction of wind to be displayed stereoscopically, on the basis of weather information acquired by the weather information acquisition unit.

Highly conspicuous displaying is likely to cause a driver to feel annoyed. It is desirable that information on wind be displayed with suppression of conspicuousness.

SUMMARY OF THE INVENTION

An object of the present invention is to provide a vehicular display apparatus capable of displaying information on wind with suppression of conspicuousness.

In order to achieve the above mentioned object, a vehicular display apparatus according to one aspect of the present invention includes an acquisition unit configured to acquire information regarding a speed of wind and a direction of the wind at a predetermined location ahead of a vehicle; a generation unit configured to generate a display figure, based on the information; and a display device configured to display an image of the display figure ahead of a driver in the vehicle, wherein the generation unit generates, in a case where the wind includes a crosswind, the display figure in a horizontally-long flat shape and moves a display position of the display figure along a direction of the crosswind.

According to another aspect of the present invention, in the vehicular display apparatus, it is preferable that the generation unit generates a plurality of the display figures and disposes the plurality of the display figures dispersedly in a display area of the display device.

According to still another aspect of the present invention, in the vehicular display apparatus, it is preferable that the generation unit increases oblateness of the display figure with an increase in a strength of the crosswind at the predetermined location.

According to still another aspect of the present invention, in the vehicular display apparatus, it is preferable that the generation unit slants a major axis of the display figure in response to the direction of the wind at a cross section orthogonal to a travel direction of the vehicle.

According to still another aspect of the present invention, in the vehicular display apparatus, it is preferable that the display device serves as a projector that displays, with display light projected on a windshield of the vehicle, a virtual image of the display figure superimposed on a foreground of the vehicle.

According to still another aspect of the present invention, in the vehicular display apparatus, it is preferable that the generation unit makes the display figure larger for a short distance from the vehicle to the predetermined location than for a long distance from the vehicle to the predetermined location.

According to still another aspect of the present invention, in the vehicular display apparatus, it is preferable that the display device makes a position of formation of the virtual image closer to the driver for a short distance from the vehicle to the predetermined location than for a long distance from the vehicle to the predetermined location.

According to still another aspect of the present invention, in the vehicular display apparatus, it is preferable that the acquisition unit further acquires information regarding weather at the predetermined location, and the generation unit varies the shape of the display figure between a case where rain or snow is falling at the predetermined location and a case where neither rain nor snow is falling at the predetermined location.

According to still another aspect of the present invention, in the vehicular display apparatus, it is preferable that the vehicular display apparatus further includes a prediction unit configured to perform risk prediction, based on the information acquired by the acquisition unit; and a display control unit configured to determine whether or not the display figure is to be displayed, based on a prediction result from the prediction unit.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 illustrates a vehicle equipped with a vehicular display apparatus according to an embodiment;
FIG. 2 is a block diagram of the vehicular display apparatus according to the embodiment;
FIG. 3 illustrates a plurality of display figures displayed in a display area;
FIG. 4 illustrates display figures and icons in the embodiment;
FIG. 5 is an explanatory view of the oblateness of a display figure;
FIG. 6 illustrates the movement direction of the display figure;
FIG. 7 illustrates the movement direction of the display figure;
FIG. 8 illustrates the display figure having an oblique major axis;
FIG. 9 illustrates the display figure corresponding to a vertical wind;
FIG. 10 is an explanatory view of the display figure for a headwind;
FIG. 11 is an explanatory view of a first animation;
FIG. 12 illustrates the first animation depending on weather;
FIG. 13 is an explanatory view of a second animation;
FIG. 14 illustrates the second animation depending on weather;
FIG. 15 is a flowchart according to the embodiment;
FIG. 16 is a map related to determination of the degree of risk; and
FIG. 17 is a map related to determination of the degree of risk.

DETAILED DESCRIPTION OF THE PREFERRED EMBODIMENTS

A vehicular display apparatus according to an embodiment of the present invention will be described in detail below with reference to the drawings. Note that the invention is not limited to the embodiment. Constituent elements in the following embodiment include constituent elements conceivable easily by those skilled in the art and substantially the same constituent elements.

Embodiment

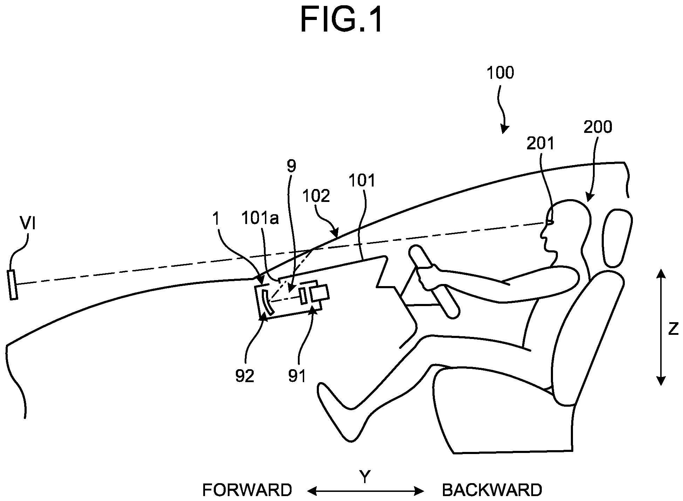

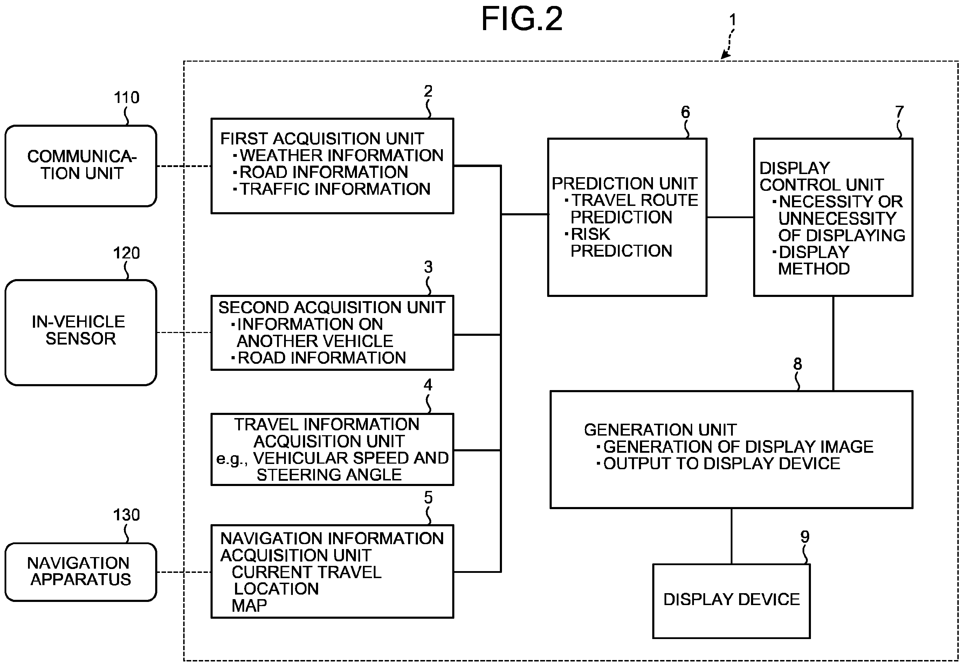

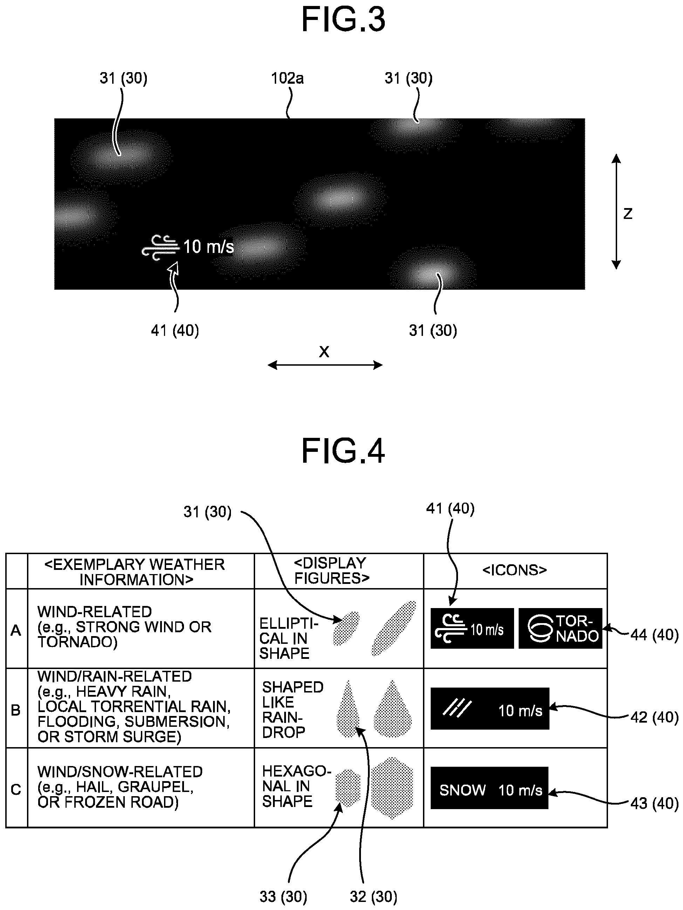

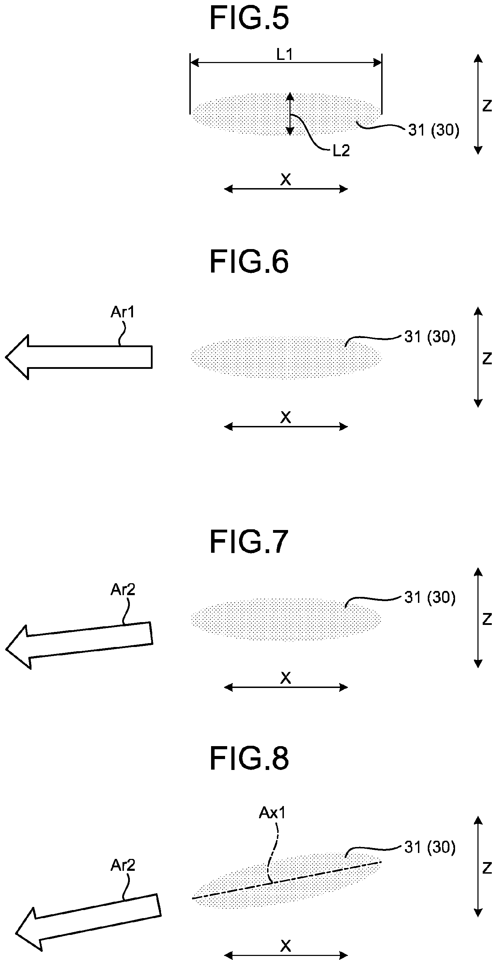

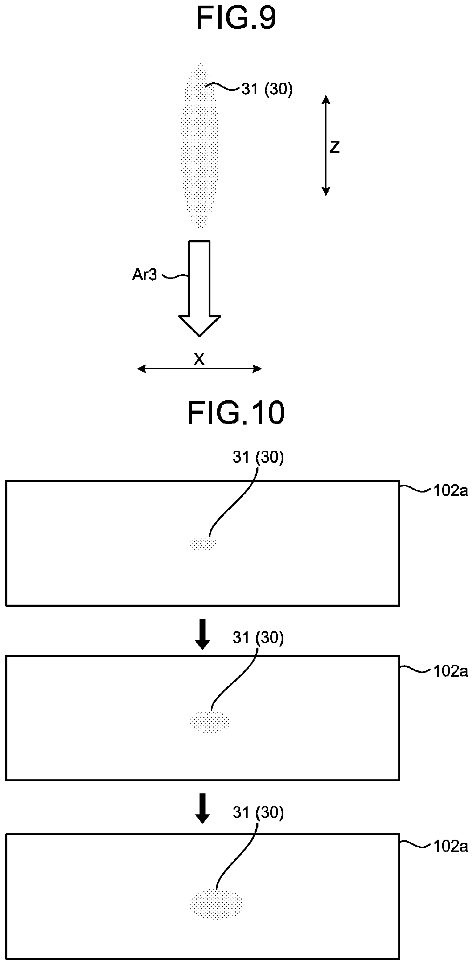

An embodiment will be described with reference to FIGS. 1 to 17. The present embodiment relates to a vehicular display apparatus. FIG. 1 illustrates a vehicle equipped with the vehicular display apparatus according to the embodiment. FIG. 2 is a block diagram of the vehicular display apparatus according to the embodiment. FIG. 3 illustrates a plurality of display figures displayed in a display area. FIG. 4 illustrates display figures and icons in the embodiment. FIG. 5 is an explanatory view of the oblateness of a display figure. FIG. 6 illustrates the movement direction of the display figure. FIG. 7 illustrates the movement direction of the display figure. FIG. 8 illustrates the display figure having an oblique major axis. FIG. 9 illustrates the display figure corresponding to a vertical wind. FIG. 10 is an explanatory view of the display figure for a headwind.

As illustrated in FIG. 1, a vehicular display apparatus 1 according to the embodiment is mounted on a vehicle 100. The vehicular display apparatus 1 according to the embodiment serves as a so-called head-up display apparatus. The vehicular display apparatus 1 displays a virtual image VI ahead of an eyepoint 201 in the vehicle 100. The eyepoint 201 corresponds to the position previously determined as the eye position of a driver 200 on the driver's seat.

The vehicular display apparatus 1 is disposed inside a dashboard 101 in the vehicle 100. The upper face of the dashboard 101 is provided with an opening 101a. The vehicular display apparatus 1 projects display light for an image onto a windshield 102 through the opening 101a. The windshield 102 corresponds to a reflective portion located ahead of the eyepoint 201 in the vehicle 100. For example, the windshield 102 is semi-transmissive and reflects, to the eyepoint 201, the incident display light from the vehicular display apparatus 1. The driver 200 recognizes, as the virtual image VI, the image reflected by the windshield 102. The driver 200 recognizes the virtual image VI as if the virtual image VI is present ahead of the windshield 102.

Note that, in the present specification, unless otherwise specified, the "longitudinal direction" indicates the longitudinal direction of the vehicle 100 equipped with the vehicular display apparatus 1. In addition, unless otherwise specified, the "lateral direction" indicates the lateral direction of the vehicle 100, and the "vertical direction" indicates the vertical direction of the vehicle 100.

As illustrated in FIG. 2, the vehicular display apparatus 1 includes a first acquisition unit 2, a second acquisition unit 3, a travel information acquisition unit 4, a navigation information acquisition unit 5, a prediction unit 6, a display control unit 7, a generation unit 8, and a display device 9. The first acquisition unit 2, the second acquisition unit 3, the travel information acquisition unit 4, the navigation information acquisition unit 5, the prediction unit 6, the display control unit 7, and the generation unit 8 correspond, for example, to a computer including an arithmetic unit, a storage unit, and a communication interface. The first acquisition unit 2, the second acquisition unit 3, the travel information acquisition unit 4, the navigation information acquisition unit 5, the prediction unit 6, the display control unit 7, and the generation unit 8 operate, for example, on the basis of a program stored in advance.

The first acquisition unit 2 acquires weather information, road information, and traffic information through a communication unit 110 in the vehicle 100. The communication unit 110 performs vehicle-to-everything (V2X) communication. For example, the communication unit 110 is capable of wireless communication with an infrastructure system through road-to-vehicle communication. The communication unit 110 is capable of wireless communication with another vehicle through vehicle-to-vehicle communication. The communication unit 110 may be connected to a cloud network through wireless communication with a communication base station. The communication unit 110 is pursuant to any communication standard for wireless communication.

The weather information acquired by the first acquisition unit 2 corresponds to information at a predetermined location ahead of the vehicle 100. Examples of the predetermined location include the end of a tunnel, an underpass, a bridge, an elevated road, a coastal road, a street of business buildings, and a mountain road. Examples of the weather information include information regarding the speed and direction of wind, information regarding the presence or absence of rainfall or the amount of rainfall, information regarding the presence or absence of snowfall or the amount of snowfall, and information regarding temperature. The speed or direction of wind is detected, for example, by an anemometer provided at the predetermined location.

The first acquisition unit 2 according to the present embodiment calculates the wind components in three directions, on the basis of the speed and direction of wind. The three directions correspond to the lateral direction X of the vehicle 100, the travel direction Y of the vehicle 100, and the vertical direction Z of the vehicle 100. The lateral direction X, the travel direction Y, and the vertical direction Z are orthogonal to each other. On the basis of the speed and direction of wind at the predetermined location, the first acquisition unit 2 divides the wind blowing at the predetermined location into a first wind component in the lateral direction X, a second wind component in the travel direction Y, and a third wind component in the vertical direction Z.

The road information acquired by the first acquisition unit 2 corresponds to information about the state of the road surface at the predetermined location ahead of the vehicle 100. For example, the road information includes information regarding freezing on the road surface, information regarding puddles on the road surface, and information regarding submersion of the road surface. The traffic information acquired by the first acquisition unit 2 corresponds to traffic information about the periphery of the vehicle 100. For example, the traffic information includes information about the position, type, and travel direction of another vehicle present on the periphery of the vehicle 100.

The second acquisition unit 3 acquires, from an in-vehicle sensor 120 mounted on the vehicle 100, information on another vehicle present on the periphery or road information. For example, the in-vehicle sensor 120 includes a sensor that detects the relative position or relative speed of another vehicle to the vehicle 100. Examples of such a sensor include laser imaging detection and ranging (LIDAR) sensor and a radar sensor. The in-vehicle sensor 120 may include a sensor that detects the shape of another vehicle. The in-vehicle sensor 120 may include a camera that captures the periphery of the vehicle 100. The second acquisition unit 3 acquires the information on another vehicle or the road information, on the basis of a detection result from the in-vehicle sensor 120.

The travel information acquisition unit 4 acquires travel information on the vehicle 100. For example, the travel information includes the speed and steering angle of the vehicle 100. For example, the travel information acquisition unit 4 acquires the travel information from a speed sensor or a steering-angle sensor mounted on the vehicle 100.

The navigation information acquisition unit 5 acquires the current travel location of the vehicle 100, map information, and guiding-route information. For example, the navigation information acquisition unit 5 acquires various types of information from a navigation apparatus 130 mounted on the vehicle 100. The navigation information acquisition unit 5 may acquire information from a portable navigation apparatus or a navigation application on a smartphone.

The prediction unit 6 performs travel route prediction or risk prediction. The prediction unit 6 makes various types of predictions, on the basis of the information acquired by the first acquisition unit 2, the second acquisition unit 3, the travel information acquisition unit 4, and the navigation information acquisition unit 5. For example, the prediction unit 6 predicts a travel route for the vehicle 100 or a travel route for another vehicle. The prediction unit 6 performs risk prediction, for example, on the basis of the speed or direction of wind.

The display control unit 7 determines whether or not a cautionary message is to be displayed to the driver 200 in the vehicle 100. The display control unit 7 determines whether or not a cautionary message requires displaying, on the basis of a prediction result from the prediction unit 6. In a case where a cautionary message is to be displayed, the display control unit 7 determines a display method therefor. In a case where a cautionary message is to be displayed, the display control unit 7 issues, to the generation unit 8, an instruction for a display method for the cautionary message.

The generation unit 8 generates a display image and outputs the generated display image to the display device 9. The generation unit 8 according to the present embodiment generates a display figure 30 indicating the condition of weather. FIG. 3 illustrates an exemplary display figure 30 and an exemplary icon 40 displayed as a virtual image. In the example of FIG. 3, a plurality of display figures 30 is displayed dispersedly in a display area 102a, and a single icon 40 is displayed in the display area 102a. The display area 102a serves as an area in which the virtual image VI can be displayed by the display device 9. The exemplified display area 102a is rectangular in shape. The number of display figures 30 to be displayed in the display area 102a may increase with an increase in the speed of wind at the predetermined location. Along with an increase in the number of display figures 30 to be displayed, the transmissivity of display figures 30 may rise.

The exemplified display figure 30 is an image indicating the presence of a crosswind. The generation unit 8 according to the present embodiment causes the shape of the display figure 30 and the icon 40 to vary, in response to the condition of weather. FIG. 4 illustrates the shapes of display figures 30 and icons 40 corresponding to conditions of weather. As illustrated in FIG. 4, as types of display figures 30, provided are a wind-related display figure 31, a wind/rain-related display figure 32, and a wind/snow-related display figure 33.

The wind-related display figure 31 is displayed in a case where neither rain nor snow is falling at the predetermined location or in a case where it is predicted that neither rain nor snow is falling at the predetermined location. Note that the wind-related display figure 31 may be displayed in a case where a strong wind has been observed at the predetermined location or in a case where a tornado has been observed at the predetermined location or on the periphery of the predetermined location. The shape of the exemplified wind-related display figure 31 is circular. The wind-related display figure 31 is displayed in white or in whitish color. The wind-related display figure 31 may be displayed in light gray.

The wind/rain-related display figure 32 is displayed in a case where rain is falling at the predetermined location or in a case where it is predicted that rain is falling at the predetermined location. Note that the wind/rain-related display figure 32 may be displayed in a case where a heavy rain or local torrential rain has been observed at the predetermined location. The wind/rain-related display figure 32 may be displayed in a case where flooding, submersion, or a storm surge has been observed or predicted at the predetermined location. The shape of the exemplified wind/rain-related display figure 32 is like the shape of a raindrop. The wind/rain-related display figure 32 is displayed in light-bluish color.

The wind/snow-related display figure 33 is displayed in a case where snow is falling at the predetermined location or in a case where it is predicted that snow is falling at the predetermined location. Note that the wind/snow-related display figure 33 may be displayed in a case where hail or graupel is falling at the predetermined location or in a case where the predetermined location corresponds to a frozen road. The shape of the exemplified wind/snow-related display figure 33 is hexagonal. The wind/snow-related display figure 33 is displayed, for example, in white or in whitish color.

The generation unit 8 adjusts the oblateness of the display figure 30 in response to the speed and direction of wind at the predetermined location. More particularly, in a case where the wind at the predetermined location includes a crosswind, the generation unit 8 makes the shape of the display figure 30 horizontally-long and flat. Displaying a display figure 30 in horizontally-long flat shape enables the driver 200 to easily understand that a crosswind is blowing.

The generation unit 8 according to the present embodiment increases the oblateness F of the display figure 30 with an increase in the strength of the crosswind at the predetermined location. For example, in a case where the length of the major axis of the display figure 30 and the length of the minor axis of the display figure 30 are defined as L1 and L2, respectively, the oblateness F is expressed by the following Expression (1). That is, the generation unit 8 generates, in a case where the crosswind is strong, a display figure 30 elongated along the lateral direction X. The vehicular display apparatus 1 according to the present embodiment makes a more flat display figure 30 for a stronger crosswind, so that the driver can pay attention to the crosswind.

$$F = (L1 - L2)/L1 \qquad\qquad\qquad (1)$$

Note that the generation unit 8 may adjust the oblateness F in response to the degree of the crosswind. The generation unit 8 may change the display angle of the display figure in response to the strength of the crosswind and the strength of the vertical wind.

The generation unit 8 moves the display figure 30 in response to the direction of wind at a cross section orthogonal to the travel direction Y of the vehicle 100.

In the following description, the cross section orthogonal to the travel direction Y is simply referred to as a "predetermined cross section". The predetermined cross section corresponds to a cross section in both the lateral direction X and the vertical direction Z. In a case where a crosswind is blowing with no third wind component in the vertical direction Z, the generation unit 8 moves the display figure 30 horizontally in the lateral direction X as indicated with an arrow Ar1 in FIG. 6.

In a case where the third wind component is present in addition to the first wind component as a crosswind, the generation unit 8 moves the display figure 30 obliquely as indicated with an arrow Ar2 in FIG. 7. For example, the movement direction indicated with the arrow Ar2 corresponds to the direction of a resultant vector of the vector of the first wind component and the vector of the third wind component. The vehicular display apparatus 1 according to the present embodiment moves the display figure 30 in response to the direction of wind, so that the driver can intuitively understand the direction of wind.

The generation unit 8 changes the movement speed of the display figure 30 in response to the speed of wind at the predetermined cross section. For example, the generation unit 8 increases the movement speed of the display figure 30 with an increase in the speed of wind at the predetermined cross section. The vehicular display apparatus 1 according to the present embodiment changes the movement speed of the display figure 30 in response to the speed of wind, so that the driver can intuitively understand the strength of wind.

The generation unit 8 may slant the display figure 30 in response to the direction of wind at the predetermined cross section. For example, the display figure 30 illustrated in FIG. 8 has a major axis Ax1 slanting with respect to the lateral direction X. For example, the direction of the major axis Ax1 is identical to the movement direction indicated with the arrow Ar2.

Note that, in a case where wind is blowing in the vertical direction Z and no crosswind is present at the predetermined location, the generation unit 8 may make the shape of the display figure 30 vertically long as illustrated in FIG. 9. In this case, the generation unit 8 may move the display figure 30 in the vertical direction Z as indicated with an arrow Ar3.

In a case where the second wind component in the travel direction Y is present, the generation unit 8 performs an animation in which the display figure 30 varies in size as in the following description. FIG. 10 illustrates a change in the size of the display figure 30 in a case where the wind at the predetermined location corresponds to a headwind against the vehicle 100. When expressing a headwind with the display figure 30, the generation unit 8 increases the size of the display figure 30 in response to the elapse of time. For example, the generation unit 8 changes the size of the display figure 30 while keeping the oblateness F of the display figure 30 constant. A change in the size of the display figure 30 enables the driver to intuitively understand the direction of wind in the travel direction Y. In a case where the wind at the predetermined location corresponds to a tail wind with respect to the vehicle 100, the generation unit 8 may reduce the size of the display figure 30 in response to the elapse of time.

The icon 40 is displayed in the display area 102a together with the display figure 30, and includes characters indicating weather information. As illustrated in FIG. 4, as types of icons 40, provided are a wind-related icon 41, a wind/rain-related icon 42, and a wind/snow-related icon 43.

The wind-related icon 41 is displayed together with the wind-related display figure 31. The exemplified wind-related icon 41 includes a figure indicating wind and characters indicating the speed of wind. Note that, in a case where a tornado has occurred at the predetermined location, the generation unit 8 generates an icon 44 indicating a tornado, instead of the wind-related icon 41. The icon 44 indicating a tornado includes a figure indicating a tornado and characters indicating a tornado. The wind-related icon 41 and the icon 44 indicating a tornado are displayed, for example, in the same color as the wind-related display figure 31.

The wind/rain-related icon 42 is displayed together with the wind/rain-related display figure 32. The exemplified wind/rain-related icon 42 includes a figure indicating rain and characters indicating the speed of wind. The wind/rain-related icon 42 is displayed, for example, in the same color as the wind/rain-related display figure 32. The wind/snow-related icon 43 is displayed together with the wind/snow-related display figure 33. The wind/snow-related icon 43 includes characters indicating snow and characters indicating the speed of wind. The wind/snow-related icon 43 is displayed, for example, in the same color as the wind/snow-related display figure 33.

The generation unit 8 according to the present embodiment adjusts the size of the display figure 30 in response to the distance from the vehicle 100 to the predetermined location. For example, in a case where the distance from the vehicle 100 to the predetermined location is short, the generation unit 8 increases the size of the display figure 30. Meanwhile, in a case where the distance from the vehicle 100 to the predetermined location is long, the generation unit 8 reduces the size of the display figure 30. Such expression of a sense of perspective enables the driver 200 to recognize whether the current location is distant from or close to the predetermined location. For example, the generation unit 8 gradually increases the size of the display figure 30 along with a reduction in the distance from the vehicle 100 to the predetermined location.

Note that, in a case where the display device 9 has a mechanism of adjusting the position of formation of the virtual image VI, a sense of perspective can be expressed by the display device 9. For example, such a mechanism serves as a mechanism of changing the optical path length from an image projection unit 91 to the windshield 102. The display device 9 having the adjustment mechanism may make the position of formation of the virtual image VI closer to the driver 200 for a short distance from the vehicle 100 to the predetermined location than for a long distance from the vehicle 100 to the predetermined location.

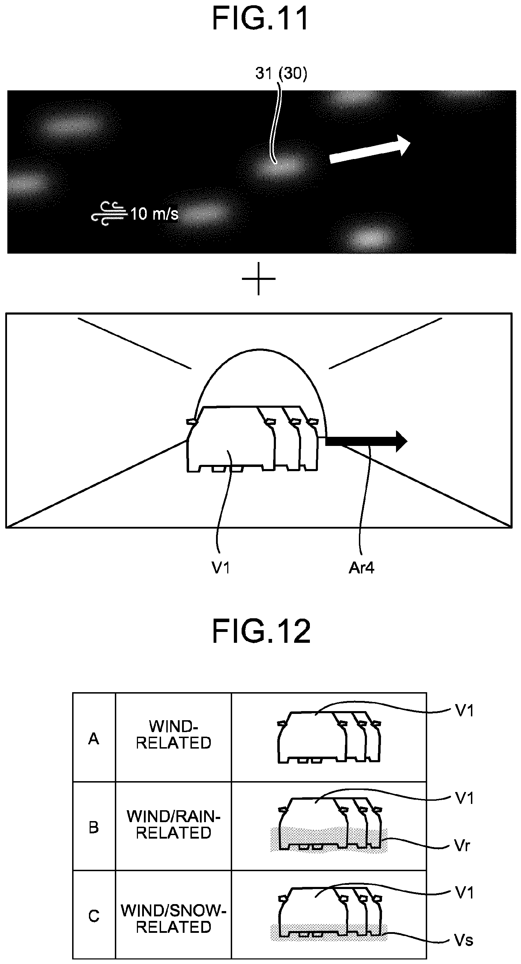

The vehicular display apparatus 1 according to the present embodiment has a function of performing an animation indicating the predicted behavior of the vehicle 100. In the following description, an animation indicating the predicted behavior of the vehicle 100 is simply referred to as a "first animation". FIG. 11 illustrates an exemplary first animation toward the end of a tunnel.

The first animation is performed on the basis of a prediction result from the prediction unit 6. For example, the prediction unit 6 predicts that the vehicle 100 would wander to the right as indicated with an arrow Ar4 due to the crosswind at the end of the tunnel. In this case, the generation unit 8 generates an animation in which a virtual image V1 indicating the vehicle 100 (hereinafter, simply referred to as a "first virtual image") moves from left to right. The shape of the first virtual image V1 is simulant of the shape of the vehicle 100. The first virtual image V1 is displayed, for example, in white or in whitish color. The first animation is an animation that indicates the wandering behavior of the vehicle 100.

The first virtual image V1 is displayed to be superimposed on the predicted position of the vehicle 100 in the future. The predicted position of the vehicle 100 is calculated on the basis of the speed of the vehicle 100. For example, the display position of the first virtual image V1 corresponds to the position of the vehicle 100 after a few seconds.

The vehicular display apparatus 1 according to the present embodiment combines the display figure 30 and the first virtual image V1, to generate a display screen. That is, the vehicular display apparatus 1 performs an animation of the display figure 30 and the first animation, simultaneously.

The generation unit 8 may vary the display mode of the first virtual image V1 in response to rainfall or snowfall. As illustrated in FIG. 12, at the time of rainfall, the generation unit 8 superimposes a virtual image Vr shaped like waves onto the lower portion of the first virtual image V1. The virtual image Vr suggests a wet road surface at the predetermined location or a submerged road surface at the predetermined location. At the time of snowfall, the generation unit 8 superimposes a virtual image Vs flat in shape onto the lower portion of the first virtual image V1. The virtual image Vs suggests a snow-covered road surface at the predetermined location.

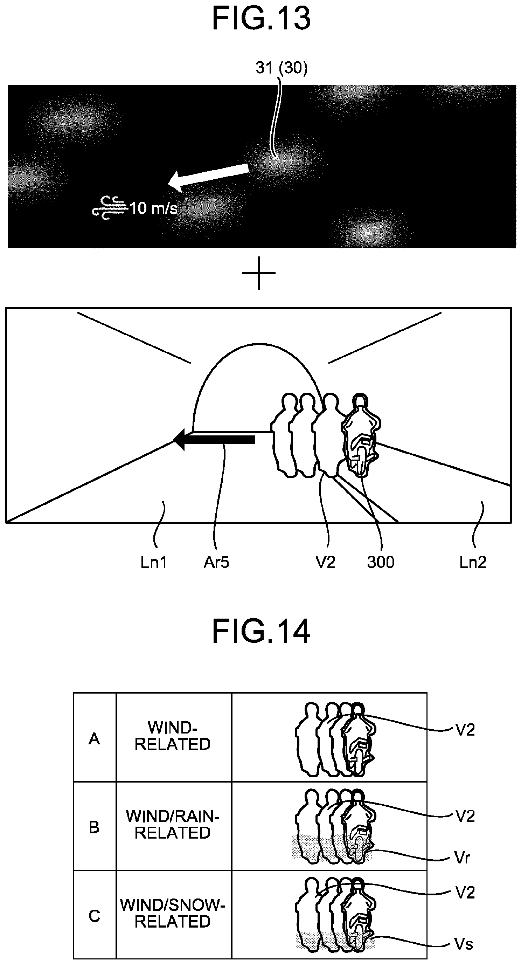

The vehicular display apparatus 1 may be configured to perform a second animation in the following description, instead of the first animation. The second animation indicates the predicted behavior of another vehicle. FIG. 13 illustrates an exemplary second animation toward the end of a tunnel. In FIG. 13, a lane Ln1 corresponds to a lane on which the vehicle 100 is traveling. Another vehicle 300 corresponds to a two-wheeled vehicle traveling on an adjacent lane Ln2. The other vehicle 300 is located obliquely ahead of the vehicle 100 and is traveling in the same travel direction Y as the vehicle 100.

The second animation is performed on the basis of a prediction result from the prediction unit 6. For example, the prediction unit 6 predicts that the other vehicle 300 would wander to the left as indicated with an arrow Ar5 due to the crosswind at the end of the tunnel. In this case, the generation unit 8 generates an animation in which a virtual image V2 indicating the other vehicle 300 (hereinafter, simply referred to as a "second virtual image") moves from right to left. The shape of the second virtual image V2 is simulant of the shape of the other vehicle 300. For example, the second virtual image V2 corresponds to an image with a colored frame of which the inside is colorless. The second animation indicates the wandering behavior of the other vehicle 300. The wandering direction of the other vehicle 300 is identical to the direction of approach to the lane Ln1 on which the vehicle 100 is traveling. That is, the vehicular display apparatus 1 performs the second animation in a case where the other vehicle 300 is predicted to wander so as to approach the vehicle 100.

In the first frame of the second animation, the generation unit 8 displays the second virtual image V2 at the position superimposed on the other vehicle 300. In the following frames, the generation unit 8 moves the second virtual image V2 in the direction indicated with the arrow Ar5 from the position superimposed on the other vehicle 300. Such an animation may be repeatedly displayed.

For example, the vehicular display apparatus 1 combines the display figure 30 and the second virtual image V2, to generate a display screen. That is, the vehicular display apparatus 1 performs an animation of the display figure 30 and the second animation, simultaneously.

The generation unit 8 may vary the display mode of the second virtual image V2 in response to rainfall or snowfall. As illustrated in FIG. 14, at the time of rainfall, the generation unit 8 superimposes the virtual image Vr shaped like waves onto the lower portion of the second virtual image V2. At the time of snowfall, the generation unit 8 superimposes the virtual image Vs flat in shape onto the lower portion of the second virtual image V2.

The display device 9 serves as a device that displays an image of the display figure 30 ahead of the driver 200 in the vehicle 100. The display device 9 according to the present embodiment serves as a projector that displays, with display light projected on the windshield 102 of the vehicle 100, a virtual image of the display figure 30 superimposed on the foreground of the vehicle 100. As illustrated in FIG. 1, the display device 9 includes an image projection unit 91 and a mirror 92. The image projection unit 91 generates display light for an image including the display figure 30, on the basis of image information generated by the generation unit 8.

For example, the image projection unit 91 corresponds to a liquid crystal display, such as a thin film transistor-liquid crystal display (TFT-LCD). In this case, the image projection unit 91 includes a liquid crystal display unit that displays an image, and outputs display light from the liquid crystal display unit. Note that the image projection unit 91 is not limited to a liquid crystal display, and thus a device that generates an image on a screen with laser light may be provided. In this case, the image projection unit 91 outputs display light for the image from the screen.

The mirror 92 serves as a reflective member that reflects, to the windshield 102, the display light output from the image projection unit 91. The mirror 92 has a reflective face on which the display light is reflected. For example, the reflective face is free-form in shape. The mirror 92 is preferably a magnifying mirror that magnifies and reflects the display light. The windshield 102 reflects the display light to the eyepoint 201 of the driver 200. The mirror 92 reflects the display light to the area superimposed on the foreground of the vehicle 100, on the windshield 102. Therefore, the formed virtual image VI is displayed in superimposition on the foreground of the vehicle 100.

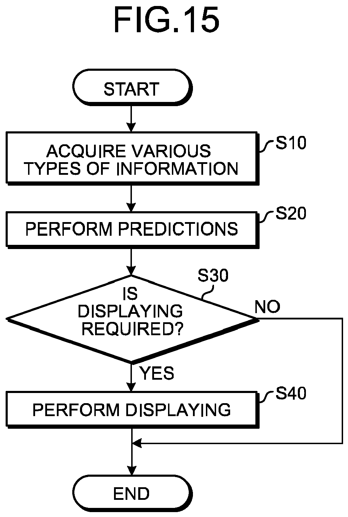

The operation of the vehicular display apparatus 1 will be described with reference to the flowchart of FIG. 15. In Step S10, various types of information are acquired. The first acquisition unit 2 acquires weather information, road information, and traffic information through the communication unit 110. The second acquisition unit 3 acquires information on another vehicle and road information from the in-vehicle sensor 120. The travel information acquisition unit 4 acquires travel information regarding vehicular speed and steering angle. The navigation information acquisition unit 5 acquires, from the navigation apparatus 130, for example, the current travel location, map information, and route-guide information. After Step S10, the processing proceeds to Step S20.

In Step S20, the prediction unit 6 performs travel route prediction or risk prediction. The prediction unit 6 predicts a travel route for the vehicle 100, for example, on the basis of the current travel location of the vehicle 100, the map information, the guiding route, and the speed and steering angle of the vehicle 100. The prediction unit 6 may predict a travel route for another vehicle. For example, on the basis of the relative position and relative speed of another vehicle acquired from the in-vehicle sensor 120, the prediction unit 6 can predict a travel route for the other vehicle or the future position of the other vehicle. In addition, on the basis of the information acquired in Step S10, the prediction unit 6 performs risk prediction. For example, the prediction unit 6 can determine the degree of risk, on the basis of the strength of wind at the predetermined location. In this case, if the speed of wind at the predetermined location is not less than the threshold, the prediction unit 6 can determine that the degree of risk at the predetermined location is high.

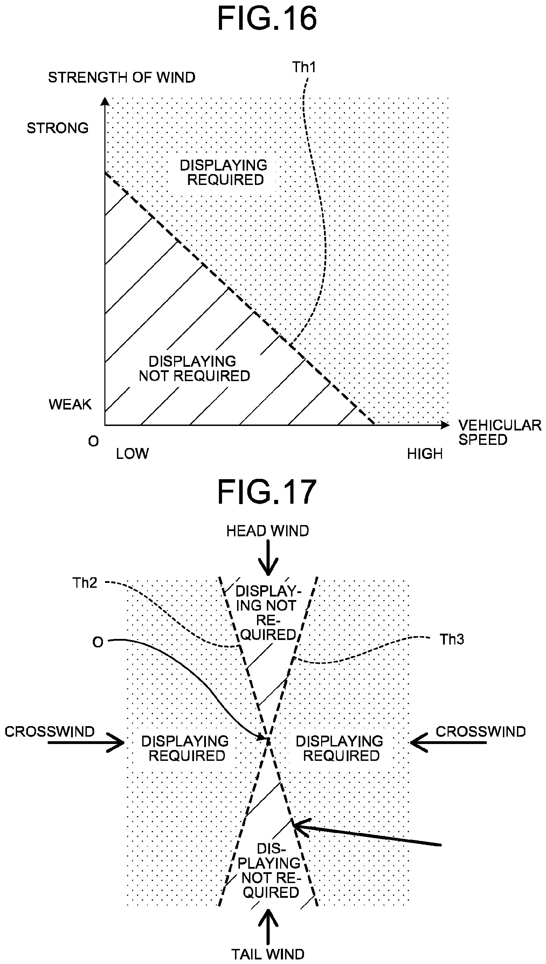

The prediction unit 6 may determine the degree of risk, on the basis of the speed of the vehicle 100, in addition to the speed of wind at the predetermined location. In this case, for example, on the basis of a map illustrated in FIG. 16, the prediction unit 6 determines whether the degree of risk is high or low. In FIG. 16, the horizontal axis indicates the speed of the vehicle 100 and the vertical axis indicates the strength of wind at the predetermined location. The strength of wind may be the speed of wind in the direction of wind at the predetermined location or the speed of the crosswind. A boundary Th1 is a criterion for determination of whether a cautionary message, such as the display figure 30, the first animation, or the second animation, needs displaying. In a case where the point determined on the basis of the vehicular speed and the strength of wind is located on the origin O side with respect to the boundary Th1, it is determined that no displaying is required. Meanwhile, in a case where the point determined on the basis of the vehicular speed and the strength of wind is located on the opposite side to the origin side with respect to the boundary Th1, it is determined that displaying is required. Note that the exemplified boundary Th1 is linear but this is not limiting. For determination based on the boundary Th1, hysteresis is provided to suppress hunting in control.

The prediction unit 6 may determine the degree of risk, on the basis of the direction of wind at the predetermined location, in addition to the speed of wind at the predetermined location. In this case, for example, on the basis of a map illustrated in FIG. 17, the prediction unit 6 determines whether the degree of risk is high or low. In the map illustrated in FIG. 17, the value in the horizontal-axis direction indicates the strength of the crosswind at the predetermined location, and the value in the vertical-axis direction indicates the strength of wind along the travel direction Y at the predetermined location. Any point in the left area with respect to the origin O indicates a rightward crosswind. Any point in the right area with respect to the origin O indicates a leftward crosswind. Any point in the lower area with respect to the origin O indicates a tail wind. Any point in the upper area with respect to the origin O indicates a headwind.

Boundaries Th2 and Th3 are criteria for determination of whether a cautionary message, such as the display figure 30, the first animation, or the second animation, needs displaying. In any area in which the crosswind is stronger with respect to the boundaries Th2 and Th3, it is determined that displaying is required. Meanwhile, in any area between the boundaries Th2 and Th3 in the horizontal-axis direction, it is determined that no displaying is required.

The prediction unit 6 may determine the degree of risk, on the basis of the state of the road surface at the predetermined location, in addition to the speed of wind at the predetermined location. Examples of the state of the road surface include the state of freezing on the road surface, the state of sand on the road surface, and the state of paving, indicating the slipperiness on the road surface. In response to the slipperiness on the road surface, the boundary Th1 of FIG. 16 or the boundaries Th2 and Th3 of FIG. 17 may be changed. The value of the boundary Th1 or the values of the boundaries Th2 and Th3 are set such that the degree of risk is determined to be higher with the road surface having a high slipperiness than with the road surface having a low slipperiness.

For example, the boundary Th1 of FIG. 16 may be set closer to the origin O with the road surface having a high slipperiness than with the road surface having a low slipperiness. For example, the space between the boundaries Th2 and Th3 in the horizontal-axis direction may be narrower with the road surface having a high slipperiness than with the road surface having a low slipperiness.

In response to the driving state of the driver 200, the boundary Th1 or the boundaries Th2 and Th3 may be changed. For example, the value of the boundary Th1 or the values of the boundaries Th2 and Th3 are set such that the degree of risk is determined to be higher in the state of hands-off where the driver 200 is not taking the steering wheel than in the state where the driver 200 is takeing the steering wheel.

Note that, an exemplary situation of hands-off is a case where the vehicle 100 is in self-driving. In this case, whether or not the degree of risk should be determined to be higher may be set in response to the level of self-driving. For example, the value of the boundary Th1 or the values of the boundaries Th2 and Th3 are set such that the degree of risk is determined to be higher in the self-driving state for which the driver is responsible.

After the prediction unit 6 performs predictions in Step S20, the processing proceeds to Step S30. In Step S30, the display control unit 7 determines whether or not displaying is required. For example, on the basis of the information acquired in Step S10 and the prediction result in Step S20, the display control unit 7 determines whether or not a cautionary message, such as the display figure 30, is to be displayed. For example, when the prediction unit 6 determines that a cautionary message needs displaying, the display control unit 7 determines that a cautionary message is to be displayed. The display control unit 7 may determine whether or not displaying is required, in response to the strength of wind at the current location or the relation to another vehicle, in addition to the prediction result from the prediction unit 6. In this case, for example, if the following first condition, second condition, or third condition is satisfied, the display control unit 7 determines that displaying is required.

The first condition indicates that the wind is stable at the current location of the vehicle 100 but it is predicted that the state of the predetermined location just ahead is risky. The second condition indicates that the wind is risky at the current location of the vehicle 100 and it is predicted that, at a point just ahead, the vehicle 100 would travel side by side with a vehicle on the adjacent line. The third condition indicates that the wind is risky at the current location of the vehicle 100 and it is predicted that, at a point just ahead, the vehicle 100 and a vehicle on the adjacent line would pass each other. Note that, for example, the distance from the current location to a point just ahead enables the point to come in the sight of the driver 200. In other words, a point just ahead is located in the range that the driver 200 can visually recognize.

In Step S30, if it is affirmatively determined that displaying is required, the processing proceeds to Step S40, otherwise, the flowchart just terminates.

In Step S40, the generation unit 8 generates a display screen. For example, the generation unit 8 combines the display figure 30 and the icon 40 to generate a display screen. For the first animation, the generation unit 8 combines the display figure 30, the icon 40, and an image for the first virtual image V1, to generate a display screen. For the second animation, the generation unit 8 combines the display figure 30, the icon 40, and an image for the second virtual image V2, to generate a display screen. The generation unit 8 outputs the generated display screen to the display device 9. The display device 9 projects, onto the windshield 102, display light for the display screen acquired from the generation unit 8. After Step S40, the flowchart just terminates.

Note that the display device 9 does not necessarily display the virtual image VI in superimposition on the foreground of the vehicle 100. That is, the virtual image VI may be displayed at a position out of the foreground. The display device 9 is not limited to a device that displays the virtual image VI. For example, the display device 9 may be a device that causes the driver 200 to visually recognize a real image displayed on a screen. In this case, the screen of the display device 9 is disposed at a place that the driver 200 can visually recognize, ahead of the driver 200. For example, the display device 9 may be part of a meter apparatus or may be disposed adjacently to the meter apparatus.

As described above, the vehicular display apparatus 1 according to the embodiment includes the first acquisition unit 2, the generation unit 8, and the display device 9. The first acquisition unit 2 acquires information regarding the speed and direction of wind at the predetermined location ahead of the vehicle 100. The generation unit 8 generates the display figure 30, on the basis of the information acquired by the first acquisition unit 2. The display device 9 displays an image of the display figure 30 ahead of the driver 200 in the vehicle 100.

In a case where the wind at the predetermined location includes a crosswind, the generation unit 8 generates the display figure 30 in a horizontally-long flat shape and moves the display position of the display figure 30 in the direction of the crosswind. The vehicular display apparatus 1 according to the present embodiment provides information regarding wind with the flat shape of the display figure 30 and the movement direction of the display figure 30. The vehicular display apparatus 1 according to the present embodiment can inform the driver 200 of intuitive and comprehensible information regarding wind. In addition, a simple shape of the display figure 30 enables a reduction in the conspicuousness of the display figure 30. For example, in a case where a display figure is complicated in shape, for understanding of the meaning of the display figure, the display figure needs gazing at. In contrast to this, the vehicular display apparatus 1 according to the present embodiment displays the information regarding wind with the flat shape and the direction of movement, so that conspicuousness of the display figure 30 can be reduced.

For example, as illustrated in FIG. 3, the generation unit 8 according to the present embodiment generates a plurality of display figures 30 and disposes the plurality of display figures 30 dispersedly in the display area 102a of the display device 9. Dispersing the plurality of display figures 30 enables a reduction in the conspicuousness of each display figure 30.

The generation unit 8 according to the present embodiment increases the oblateness F of the display figure 30 with an increase in the strength of the crosswind at the predetermined location. Therefore, the vehicular display apparatus 1 according to the present embodiment can notify the driver 200 of the strength of the crosswind, properly.

The generation unit 8 according to the present embodiment slants the major axis Ax1 of the display figure 30

in response to the direction of wind at the predetermined cross section. Therefore, the vehicular display apparatus 1 according to the present embodiment can notify the driver 200 of the direction of wind at the predetermined location, properly.

The display device 9 according to the present embodiment serves as a projector that displays, with the display light projected on the windshield 102 of the vehicle 100, the virtual image VI of the display figure 30 superimposed on the foreground of the vehicle 100. The vehicular display apparatus 1 according to the present embodiment can notify the driver 200 of information on wind with the display figure 30 superimposed on the foreground of the vehicle 100, properly.

The first acquisition unit 2 according to the present embodiment acquires information regarding the weather at the predetermined location. Between a case where rain or snow is falling at the predetermined location and a case where neither rain nor snow is falling at the predetermined location, the generation unit 8 varies the shape of the display figure. In the present embodiment, for neither rain nor snow falling at the predetermined location, the shape of the display figure 30 is circular. For rain falling at the predetermined location, the shape of the display figure 30 is like the shape of a raindrop. For snow falling at the predetermined location, the shape of the display figure 30 is hexagonal. Varying the shape of the display figure 30 in response to the weather enables, through the display figure 30, the driver 200 to be notified of both the information regarding the weather and the information regarding wind.

Modifications of Embodiment

The shape of the display figure 30 is not limited to the exemplified shapes in the embodiment. The shape of the display figure 30 is preferably a simple shape low in conspicuousness. For example, preferably, the shape of the display figure 30 is symmetrical about the major axis Ax1. The display figure 30 having an oblateness F of 0 may have point symmetry in shape. For example, in the embodiment above, the wind-related display figure 31 and the wind/snow-related display figure 33 each having an oblateness F of 0 have point symmetry in shape. The shapes of the wind-related display figure 31 and the wind/snow-related display figure 33 generated horizontally-long and flat in shape are each symmetrical about the major axis Ax1. The shape of the wind/rain-related display figure 32 has line symmetry, regardless of the oblateness F.

The color of the display figure 30 is not limited to the exemplified colors in the embodiment. Preferably, a display color for the display figure 30 is low in chroma or low in brightness. For example, the chroma of the display figure 30 may be lower than the chroma of the icon 40, and the brightness of the display figure 30 may be lower than the brightness of the icon 40. In a case where the vehicular display apparatus 1 displays another image, in addition to the display figure 30 and the icon 40, the chroma of the display figure 30 may be lower than the chroma of the other image, and the brightness of the display figure 30 may be lower than the brightness of the other image.

The details disclosed in the embodiment and modifications above can be carried out in appropriate combination.

A vehicular display apparatus according to the embodiment generates, in a case where the wind at a predetermined location includes a crosswind, a display figure in horizontally-long flat shape and moves the display position of the display figure in the direction of the crosswind. The vehicular display apparatus according to the embodiment is capable of displaying information on wind, advantageously, with suppression of conspicuousness.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1. A vehicular display apparatus (1) comprising:

   an acquisition unit (2) configured to acquire information regarding a speed of wind and a direction of the wind at a predetermined location ahead of a vehicle (100);
   a generation unit (8) configured to generate a display figure (30), based on the information; and
   a display device (9) configured to display an image of the display figure (30) ahead of a driver (200) in the vehicle (100), wherein
   the generation unit (8) generates, in a case where the wind includes a crosswind, the display figure (30) in a horizontally-long flat shape and moves a display position of the display figure (30) along a direction of the crosswind.

2. The vehicular display apparatus (1) according to claim 1, wherein
   the generation unit (8) generates a plurality of the display figures (30) and disposes the plurality of the display figures (30) dispersedly in a display area (102a) of the display device (9).

3. The vehicular display apparatus (1) according to claim 1 or 2, wherein
the generation unit (8) increases oblateness (F) of the display figure (30) with an increase in a strength of the crosswind at the predetermined location.

4. The vehicular display apparatus (1) according to any one of claims 1 to 3, wherein
the generation unit (8) slants a major axis (Ax1) of the display figure (30) in response to the direction of the wind at a cross section orthogonal to a travel direction of the vehicle (100).

5. The vehicular display apparatus (1) according to any one of claims 1 to 4, wherein
the display device (9) serves as a projector that displays, with display light projected on a windshield (102) of the vehicle (100), a virtual image of the display figure (30) superimposed on a foreground of the vehicle (100) .

6. The vehicular display apparatus (1) according to any one of claims 1 to 5, wherein
the generation unit (8) makes the display figure (30) larger for a short distance from the vehicle (100) to the predetermined location than for a long distance from the vehicle (100) to the predetermined location.

7. The vehicular display apparatus (1) according to claim 5, wherein
the display device (9) makes a position of formation of the virtual image closer to the driver (200) for a short distance from the vehicle (100) to the predetermined location than for a long distance from the vehicle (100) to the predetermined location.

8. The vehicular display apparatus (1) according to any one of claims 1 to 7, wherein

   the acquisition unit (2) further acquires information regarding weather at the predetermined location, and
   the generation unit (8) varies the shape of the display figure (30) between a case where rain or snow is falling at the predetermined location and a case where neither rain nor snow is falling at the predetermined location.

9. The vehicular display apparatus (1) according to any one of claims 1 to 8, further comprising:

   a prediction unit (6) configured to perform risk prediction, based on the information acquired by the acquisition unit (2); and
   a display control unit (7) configured to determine whether or not the display figure (30) is to be displayed, based on a prediction result from the prediction unit (6).

# FIG.1

FORWARD ⟵ Y ⟶ BACKWARD

FIG.2

1

**2 FIRST ACQUISITION UNIT**
·WEATHER INFORMATION
·ROAD INFORMATION
·TRAFFIC INFORMATION

**3 SECOND ACQUISITION UNIT**
·INFORMATION ON ANOTHER VEHICLE
·ROAD INFORMATION

**4 TRAVEL INFORMATION ACQUISITION UNIT**
e.g., VEHICULAR SPEED AND STEERING ANGLE

**5 NAVIGATION INFORMATION ACQUISITION UNIT**
CURRENT TRAVEL LOCATION MAP

**6 PREDICTION UNIT**
·TRAVEL ROUTE PREDICTION
·RISK PREDICTION

**7 DISPLAY CONTROL UNIT**
·NECESSITY OR UNNECESSITY OF DISPLAYING
·DISPLAY METHOD

**8 GENERATION UNIT**
·GENERATION OF DISPLAY IMAGE
·OUTPUT TO DISPLAY DEVICE

**9 DISPLAY DEVICE**

**110 COMMUNICATION UNIT**

**120 IN-VEHICLE SENSOR**

**130 NAVIGATION APPARATUS**

# FIG.3

# FIG.4

|   | <EXEMPLARY WEATHER INFORMATION> | <DISPLAY FIGURES> | <ICONS> |
|---|---|---|---|
| A | WIND-RELATED (e.g., STRONG WIND OR TORNADO) | ELLIPTI-CAL IN SHAPE | |
| B | WIND/RAIN-RELATED (e.g., HEAVY RAIN, LOCAL TORRENTIAL RAIN, FLOODING, SUBMERSION, OR STORM SURGE) | SHAPED LIKE RAIN-DROP | |
| C | WIND/SNOW-RELATED (e.g., HAIL, GRAUPEL, OR FROZEN ROAD) | HEXAGO-NAL IN SHAPE | |

# FIG.5

# FIG.6

# FIG.7

# FIG.8

# FIG.9

31 (30)

Z

Ar3

X

# FIG.10

31 (30)

102a

31 (30)

102a

31 (30)

102a

# FIG.11

31 (30)

10 m/s

V1　　　　Ar4

# FIG.12

| | | |
|---|---|---|
| A | WIND-RELATED | V1 |
| B | WIND/RAIN-RELATED | V1 Vr |
| C | WIND/SNOW-RELATED | V1 Vs |

# FIG.13

31 (30)

10 m/s

+

Ln1    Ar5         V2    300        Ln2

# FIG.14

| A | WIND-RELATED | V2 |
|---|---|---|
| B | WIND/RAIN-RELATED | V2 / Vr |
| C | WIND/SNOW-RELATED | V2 / Vs |

# FIG.15

START

ACQUIRE VARIOUS TYPES OF INFORMATION ⌐S10

PERFORM PREDICTIONS ⌐S20

IS DISPLAYING REQUIRED? ⌐S30

NO

YES

PERFORM DISPLAYING ⌐S40

END

# FIG.16

# FIG.17

Europäisches
Patentamt

European
Patent Office

Office européen
des brevets

# EUROPEAN SEARCH REPORT

Application Number

EP 22 16 0477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/020546 A1 (MITSUBISHI ELECTRIC CORP [JP]) 1 February 2018 (2018-02-01) * paragraphs [0015] - [0093]; figures * | 1-7,9 | INV. B60K35/00 |
| Y | | 8 | |
| X | JP 2006 256548 A (NIPPON SEIKI CO LTD) 28 September 2006 (2006-09-28) * paragraphs [0014] - [0035]; figures * | 1-7,9 | |
| Y | | 8 | |
| Y | WO 2013/027273 A1 (MITSUBISHI ELECTRIC CORP [JP]; ARITA HIDEKAZU [JP] ET AL.) 28 February 2013 (2013-02-28) * paragraphs [0011] - [0071]; figures * | 8 | |
| A | CN 110 775 063 A (HUAWEI TECH CO LTD) 11 February 2020 (2020-02-11) * paragraphs [0183] - [0444]; figures * | 1-9 | |

TECHNICAL FIELDS
SEARCHED      (IPC)

B60K
B60W

The present search report has been drawn up for all claims

| Place of search | Date of completion of the search | Examiner |
|---|---|---|
| Munich | 22 July 2022 | Schombacher, Hanno |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 16 0477

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2022

| Patent document cited in search report | | Publication date | Patent family member(s) | | Publication date |
|---|---|---|---|---|---|
| WO 2018020546 | A1 | 01-02-2018 | CN | 109476232 A | 15-03-2019 |
| | | | JP | 6968069 B2 | 17-11-2021 |
| | | | JP | WO2018020546 A1 | 18-10-2018 |
| | | | WO | 2018020546 A1 | 01-02-2018 |
| JP 2006256548 | A | 28-09-2006 | NONE | | |
| WO 2013027273 | A1 | 28-02-2013 | JP | 5404974 B2 | 05-02-2014 |
| | | | JP | WO2013027273 A1 | 05-03-2015 |
| | | | WO | 2013027273 A1 | 28-02-2013 |
| CN 110775063 | A | 11-02-2020 | CN | 110775063 A | 11-02-2020 |
| | | | US | 2022212690 A1 | 07-07-2022 |
| | | | WO | 2021057352 A1 | 01-04-2021 |

EPO FORM P0459

For more details about this annex : see Official Journal of the European Patent Office, No. 12/82

**REFERENCES CITED IN THE DESCRIPTION**

**Patent documents cited in the description**

- WO 2018020546 A